# EUROPEAN PATENT SPECIFICATION

(11) **EP 0 970 618 B1**
(45) Date of publication and mention of the grant of the patent: **03.12.2008**
(21) Application number: 98830393.9
(22) Date of filing: 01.07.1998
(51) Int. Cl.: A23L 1/308

(54) **Completely natural dessert cream comprising fructooligosaccharides**
Vollständig natürliche Dessertcreme, welche Fructooligosaccharide enthält
Dessert complétement naturel contenant des fructooligosaccharides

(43) Date of publication of application: 12.01.2000
(73) Proprietor: SITIA-YOMO S.p.A. - SOCIETA' IN LIQUIDAZIONE, 20082 Pasturago di Vernate (MI) (IT)
(72) Inventor: Cavaliere Vesely, Renata, Milano (IT); Giani, Giovanni, Pasturago di Vernate (Milano) (IT); Maiocchi, Gianluigi, Codogno (Milano) (IT)
(74) Representative: Crugnola, Pietro

(56) References cited:
- WO-A-93/06744
- WO-A-97/35485

## Description

The invention relates to a new dessert cream of various flavours, completely natural and without saccharose added. In addition, the present invention relates to a process for preparing said dessert cream. In a preferred embodiment, the invention also relates to a dessert cream enriched with lyophilized lactic bacteria of high concentration. Within the scope of said invention the dessert cream may appear in the form of packages comprising two containers, one of which holds the dessert cream in the various flavours, the other container holding a variety of confectionery specialities which are completely natural and without sugars added.

Several different types of dessert cream are known on the market and each of them contains a varying amount of chemical additives. Currently, the dessert creams available on the market, in the different flavours, appear as a pudding-like mass of a jelly structure having the consistency typical of completely industrial foodstuffs, containing important amounts of additives. Dessert creams on the market comprise both the classic ingredients of a normal cream and a wide variety of additives selected from: thickeners-gelatinisers such as carrageenin, modified starch, carob seed meal and animal gelatines, emulsifying agents such as fat acid mono- and di-glycerides, colouring agents such as annatto, turmeric, vanilla-flavour lutein and E150a-E150b for coffee taste, natural and artificial flavours and preserving agents.

In addition, in all dessert creams a varying amount of common sugar, usually saccharose is added. Saccharose is a caries-producing sweetener giving the food a big caloric contribution and is not tolerated by diabetics. Therefore it is possible to state that the different types of dessert creams presently on the market are goods that are "sophisticated" by addition of ingredients and addivites that are not always natural and beneficial to the organism. These additives are added in legally permitted amounts, it being understood that the effects resulting from a prolonged-in-time accumulation of same are still unknown. Natural and artificial flavouring agents and additives employed are obtained through the study and development of chemistry applied to foodstuffs for satisfying the consumers' pleasure and greediness in an increasingly growing manner. It is apparent that the efforts for making a foodstuff greedy and pleasant prevail on the genuineness of the foodstuff itself, in the field of dessert creams as well. In addition, dessert creams presently produced are foods that are not always intended for all consumers' categories and consequently this kind of confectionery foodstuff is not adapted for satisfying pleasure and greediness of all consumer categories, such as diabetics for example. At the same time, these confectionery foodstuffs are preferably addressed to particular consumer categories (children and young people, for example) and it is therefore of the greatest importance to protect the goods genuineness at most.

WO 97/35485 discloses dessert products based on milk or whey products containing a milk protein mixture, which protein mixture contains more than 65 % whey protein by weight, a 10 % aqueous solution of which forms a gel when heated to 90°C for 10 minutes.

The disclosed product can be prepared without adding hydrocolloids.

WO 93/06744 discloses compositions having a creamy structure and containing a fructan or fructans mixed with a liquid such as water, milk, egg white, egg yolk or sugar syrup. Also disclosed are the use of the above-mentioned compositions for producing foodstuffs such as ice cream, salad dressings, chocolate preparations, meat products, breads and pastries, fillings, sandwich spreads, jam, dairy products, sauces, as well as foodstuffs containing such compositions.

The above described state of the art, for the different types of dessert creams, is exactly in contrast with the new alimentary trends suggested by modern nutritional guidelines towards which presently consumers seem to be steered. In fact, in the most recent years, above all in the alimentary field, a tendency to select foodstuffs that are functional and beneficial to the organism has become increasingly more important. This means that a new concept concerning health has developed in consumers as regards food to be eaten. A consumer wishes to feed on good and healthy foods, which at the same time must also be functional for his/her own organism. In the field of dessert creams a foodstuff is required which is capable of satisfying pleasure and greediness of a consumer who wishes to enjoy a confectionery product, which product however must be at the same time healthy, nutritious and natural.

Therefore, there is a need for a dessert cream that does not present the problems of the known art. In particular, there is a need for a new dessert cream capable of meeting more than one requirements simultaneously, which means that it should be necessary to have on the market, a dessert cream conceived as a good, healthy and nutritious confectionery food completely consisting of strictly natural ingredients, without flavouring substances altering the natural organoleptic perception of the product and without any kind of sophistication made by addition of additives such as colouring and preserving agents, emulsifiers, thickeners and gelatinisers, for example.

In addition, availability of a new dessert cream is required on the market, which has a reduced caloric content, devoid of saccharose and therefore of limited caries-producing power and also capable of satisfying pleasure and greediness of all consumer categories, diabetics included. Finally, there is on the market, also in the field of dessert creams, the requirement for a food having functional properties which is capable of giving benefit to the consumer's organism.

It is one of the aims of the present invention to provide a dessert cream of completely natural composition.

Another aim of the present invention is to provide a dessert cream having a reduced caloric supply, without addition of sugars, substantially devoid of saccharose and therefore of limited caries-producing power.

It is a further aim of the present invention to provide a dessert cream adapted for all consumer categories, diabetics included.

It is a still further aim of the invention to provide a dessert cream, in the field of confectionery foodstuffs, having functional properties and capable of giving benefit to the consumer's organism.

The foregoing and further aims that will become more apparent during the following detailed description are substantially obtained by the discovery made by the Applicant that has found it useful to employ a particular combination of sweeteners of natural origin and particular types of alimentary fibres such as fructooligosaccharides.

In particular, the Applicant has found that dessert creams characterized by freshness, complete-naturalness features and functional properties can be made. These functional properties are due to the combined presence of fructose and fructooligosaccharides and to the possible presence of live and viable lactic bacteria of high concentration.

Therefore it is an object of the present invention to provide a fresh dessert cream comprising the following components:
A) milk,
B) wheat floor,
C) pure milk proteins,
D) one or more natural ingredients selected from egg yolk, chocolate, cocoa, coffee, natural extracts from vanilla berries, essential lemon oil, hazelnut and almond flavours and fruit of varying typologies,
E) fructose,
F) one or more fructooligosaccharides, and further comprising lactic bacteria.

Component A is preferably present in an amount included between 65% and 80%, more preferably between 65% and 75%, component B is preferably present in an amount included between 3% and 6%, more preferably between 4% and 4.5%, component C is preferably present in an amount included between 1% and 5%, more preferably between 2.5% and 4%, component D is preferably present in an amount included between 0.1% and 9%, more preferably between 0.5% and 6%, component E is present in an amount included between 4% and 11%, preferably between 4% and 8%, component F is present in an amount included between 1% and 4%, preferably between 1% and 2%.

All the amounts stated above for each component are percentages by weight and refer to the overall weight of the final dessert cream product.

Component A is preferably fresh whole milk having a fat content of about 3-4% and a varying amount of pure milk proteins.

Component B is preferably natural wheat flour type 00.

Component C is represented by noble and pure milk proteins, in particular serum-proteins, preferably obtained by a technique involving ultrafiltration of fresh whole milk.

Pure milk proteins are added to the dessert cream in order to increase the nutritional and biologic value thereof and are utilized by lactic bacteria present in the dessert cream. In fact, lactic bacteria have proteolytic functions by which they succeed in separating the pure milk proteins into essential amino acids or bioactive peptides improving digestibility of same.

Component D comprises a series of natural ingredients necessary to give taste and flavour in a natural manner to the dessert cream of the present invention. Fruit is selected from the various typologies of fresh fruit and it is pasteurized fruit in accordance with the known technique and it is not sweetened.

In accordance with the present invention, a completely natural dessert cream without sugars added is obtained.

In place of common sugar (saccharose), sweeteners of natural origin are used which have the same caloric power as saccharose or a lower power.

Component E is fructose and it is employed as a sweetener in place of saccharose. Fructose makes the dessert cream being the object of the present invention, a confectionery foodstuff accessible to all consumer categories, diabetics included.

In addition, the dessert cream being the object of the present invention contains one or more fructooligosacoharides. Fructooligosaccharides are prebiotic ingredients and are recognized as alimentary fibres of vegetable nature having a bifidogenic activity. Fructooligosaccharides have a reduced caloric content, a partial sweetening power and are soluble dietetic fibres particularly adapted for diabetics. Fructooligosaccharides such as inulin and oligofructoses are not degraded (or are degraded only partly), are not absorbed or metabolized along the digestive path until colon. Practically, fructooligosaccharides are not hydrolysed in their monosaccharide units. For this reason they do not cause raising either of the glycemic rate or of the insulinoid rate in blood and are to be considered ideal for diabetics. Fructooligosaccharides introduced into the organism are brought into contact with the bacterial microflora present in the intestine. An addition of lactic bacteria to the dessert cream of the present invention and the particular local acidity conditions in the intestine facilitate hydrolysis of fructooligosaccharides, releasing fructose and saccharides that are useful for bifidobacteria growth and growth of other species of bacteria beneficial to the organism. Particularly advantageous fructooligosaccharides are inulin and oligofructose. Examples of these products are inulin and oligofructose produced by the Belgian Company ORAFTI S.A. and marketed under the names Raftiline ™ (inulin) and Raftilose ™ (oligofructose), respectively.

The particular fructose-fructooligosaccharide combination performs a dual action: on the one hand, it performs a sweetening function adapted for all subjects inclusive of diabetics and, on the other hand, it performs a positive prebiotic function on the organism. In fact, fructoligosaccharides help in keeping the live and viable lactic bacteria added to the dessert cream in a good viability state until colon, facilitating selection and settlement of these bacteria in the intestine (i.e. in an environment where there is already an autochthonous local microflora).

The particular fructose-fructooligosaccharide combination gives a reduced caloric contribution, taking into account the fact that dessert creams belong to the specific category of confectionery foods. In addition, it does not involve flavour alteration in the dessert cream and enables all consumer categories, inclusive of diabetics, to enjoy this type of confectionery product.

Possible preferred embodiments of the dessert cream of the present invention comprise addition of milk cream in an amount included between 8% and 13% by weight, preferably between 8% and 10% by weight and/or addition of isomalt in an amount included between 3% and 10% by weight, preferably between 4% and 7% by weight. Said percentages too refer to the overall weight of the final dessert cream product.

Possible addition of isomalt always gives a reduced caloric contribution, does not involve flavour alteration, is adapted for diabetics and performs caries-preventing functions.

Isomalt is classified by law as a sweetener and gives the confectionery products a lower caloric contribution than saccharose. It is a sweetener of natural origin being a derivative of sugar beet the structure of which, modified by an enzyme, has been made hypocaloric and caries-preventive. Isomalt is compatible with all types of food substrates both of the anhydrous and of the hydrous type and does not cause flavour alteration. Isomalt is a natural substance having a sweetening power that can be tolerated by diabetics, in that it does not cause an increase in the glycemic rate in blood and consequently people suffering from diabetes, by replacing saccharose with isomalt in food, must not be submitted to an insulinoid treatment.

It is a further object of the present invention a process for preparing said dessert cream; said process is characterized by the following steps:
a) preheating milk to a temperature included between 50 and 90°C;
b) solubilizing components B, C, D (essential lemon oil excluded), E and F in the preheated milk from step a);
c) heating the product obtained from step b) to a temperature included between 75 and 90°C;
d) homogenizing the product heated in step c), at a pressure included between 80 and 150 bars and a temperature included between 75 and 90°C;
e) pasteurizing the homogenized product obtained from step d) at a temperature included between 85 and 90°C ;
f) cooling the pasteurized product obtained from step e), at a temperature included between 40 and 70°C and subsequently packaging the same into appropriate containers at a temperature of 40-60°C.

Preferably the starting milk is first submitted to a centrifugal cleaning and titration of fat and proteinic substances, following procedures well known to those skilled in the art.

Previously, through a mixing operation, a powder mixture is prepared which comprises components B, C, D (egg yolk and essential lemon oil excluded), E and F. Components are mixed following doses and typologies defined for each recipe depending on the flavour of the dessert cream which is produced. If addition of egg yolk, a liquid ingredient, is required, this substance is added separately in step b). If addition of essential lemon oil is required, this substance is added after the pasteurisation step.

The powder mixture of the components is solubilized in batch in the milk preheated in step a).

The product from the above mentioned solubilization step b) is maintained under stirring for a period of time preferably included between 10 and 15 minutes, at a temperature included between 50 and 90°C, preferably between 70 and 90°C. The subsequent step is step d), in which homogenization of the product takes place at a temperature included between 75 and 90°C and at a pressure of 80 to 150 bars, preferably of 80 to 100 bars. Then there is step e) consisting in batch-pasteurizing the product from step d) under stirring, at a temperature preferably included between 85 and 90°C, preferably for a period of time included between 10 and 25 minutes, more preferably between 15 and 20 minutes.

After pasteurization, the product is brought to a temperature of 40 to 70°C, preferably of 60 to 70°C. Then packaging of the product occurs at a packaging temperature preferably included between 40 and 60°C, more preferably between 40 and 50°C. The dessert cream prepared using the above described process is packaged under strictly aseptic conditions into appropriate containers having the form of small cups or dessert glasses, for example.

In the case in which use of essential lemon oil is contemplated, this ingredient is added after the step of pasteurising the product at a temperature of 60-70°C.

The Applicant has discovered particularly-controlled operating conditions of the production process that enable observance of hygienic rules, best protection of the nutritional and organoleptic inheritance of the natural ingredients originally utilized, and maintaining of a natural creamy quality.

The recommended preservation temperature for the dessert cream of the present invention is about 4°C. Under these conditions the dessert cream has a shelf life of about 30 days and therefore it is a fresh cream.

Optionally, the dessert cream of the present invention can be prepared in the form of a mousse by a known technology, by blowing in an inert gas such as nitrogen after pasteurization, after cooling and before packaging, at a temperature preferably included between 10 and 20°C.

The dessert cream of the present invention can optionally be eaten in combination with a variety of confectionery specialities such as wafers, wafers with a sweet filling, almond sweets ("amaretti") and small meringues, produced with completely natural ingredients, without addition of saccharose, comprising fructose and/or fructooligosaccharides as sweeteners and optionally isomalt.

For the purpose, packages comprising two containers can be made, one of which holds the dessert cream in the different flavours in accordance with the present invention, and the other holds said confectionery specialities.

The dessert cream of the present invention originates a true new generation of dessert creams, in that it contains fresh milk joined to natural ingredients of easy digestibility and optionally to milk ferments and milk creams.

The Applicant has surprisingly found that by virtue of particular ratios between the "dry milk matrix" and the "liquid milk matrix" adopted for preparing the dessert cream of the present invention, and by virtue of the particular selection of sweeteners, above all fructose and fructooligosaccharides, one or more live and viable lyophilized lactic bacteria are added in the form of a mixture and at a high concentration to the product, without said lactic bacteria developing acidity that would give the final product a slightly acid or acidulous taste and flavour.

In addition, in order to achieve this result the Applicant has found it appropriate to introduce lactic bacteria during a particular step of the dessert cream preparation, under particular conditions. Lyophilized lactic bacteria are added under strictly aseptic conditions, during the cooling step f), at a temperature preferably included between 40 and 50°C while the product is being stirred preferably at 40-60 revolutions/minute. The added lactic bacteria are in a physical state of lyophilized powder at high concentration and are highly soluble.

The presence of live and viable lactic bacteria and fructooligosaccharides makes the dessert cream a confectionery food having functional properties and beneficial effects for the organism of a consumer wishing to enjoy a confectionery foodstuff.

Particularly advantageous results can be achieved by use of one or more of the following bacterial strains:
- *Streptococcus thermophilus*: LMG P-17225
- *Lactobacillus bulgaricus*: LMG P-17224
- *Lactobacillus acidophilus*: LMG P-17503
- *Lactobacillus casei*: LMG P-17504
- *Lactobacillus plantarum*: ATCC 8014
- *Bifidobacterium breve*: LMG P-17501
- *Bifidobacterium infantis*: LMG P-17502
- *Bifidobacterium longum*: LMG P-17500
- *Bifidobacterium bifidum*: LMG P-17499
- *Streptococcus faecium*: I-1671 preferably at the following concentrations:
   - *Streptococcus thermophilus*, at a concentration of at least 50 thousand million CFU/g (Colony Forming Units per gram) of lyophilized bacterial culture, more preferably at a concentration included between 100 and 150 thousand million CFU/g of lyophilized bacterial culture;
   - *Lactobacillus bulgaricus*, at a concentration of at least 5 thousand million CFU/g of lyophilized bacterial culture, more preferably at a concentration included between 10 and 50 thousand million CFU/g of lyophilized bacterial culture;
   - *Lactobacillus acidophilus*, at a concentration of at least one thousand million CFU/g of lyophilized bacterial culture, more preferably at a concentration included between 150 and 250 thousand million CFU/g of lyophilized bacterial culture;
   - *Lactobacillus casei*, at a concentration of at least 10 thousand million CFU/g of lyophilized bacterial culture, more preferably at a concentration included between 30 and 50 thousand million CFU/g of lyophilized bacterial culture;
   - *Lactobacillus plantarum*, at a concentration of at least 100 thousand million CFU/g of lyophilized bacterial culture, more preferably at a concentration included between 150 and 250 thousand million CFU/g of lyophilized bacterial culture;
   - *Bifidobacterium breve*, at a concentration of at least 50 thousand million CFU/g of lyophilized bacterial culture, more preferably at a concentration included between 100 and 150 thousand million CFU/g of lyophilized bacterial culture;
   - *Bifidobacterium infantis*, at a concentration of at least 50 thousand million CFU/g of lyophilized bacterial culture, more preferably at a concentration included between 100 and 150 thousand million CFU/g of lyophilized bacterial culture;
   - *Bifidobacterium longum*, at a concentration of at least 50 thousand million CFU/g of lyophilized bacterial culture, more preferably at a concentration included between 100 and 150 thousand million CFU/g of lyophilized bacterial culture;
   - *Bifidobacterium bifidum*, at a concentration of at least 50 thousand million CFU/g of lyophilized bacterial culture, more preferably at a concentration included between 100 and 150 thousand million CFU/g of lyophilized bacterial culture;
   - *Streptococcus faecium*, at a concentration of at least 50 thousand million CFU/g of lyophilized bacterial culture, more preferably at a concentration included between 100 and 150 thousand million CFU/g of lyophilized bacterial culture.

These strands can be employed individually or in various types of mixtures and are found living and viable in the dessert cream being the object of the present invention. Lyophilized lactic bacteria added to the dessert cream of the present invention are at an overall concentration preferably of at least 50 thousand million CFU/g of lyophilized bacterial culture; more preferably, at an overall concentration of at least 100 thousand million CFU/g of lyophilized bacterial culture. In these concentrations, lyophilized lactic bacteria are added to the dessert cream at a concentration preferably included between 0.4 and 0.9 g/kg of dessert cream.

In the presence of lactic bacteria of yoghurt, such as *Streptococcus thermophilus* and *Lactobacillus bulgaricus,*, ratio by weight of the former relative to the latter is preferably in the range of 1:1 to 10:1, more preferably in the range of 3:1 to 8:1.

Said strands denoted by "LMG P-" are deposited with the BCCM/LMG collection of the University of Gent, Ledeganokstraat 36, B-9000 Gent, Belgium.
ATCC 8014 strand is deposited with the American Type Culture Collection USA.
I-1671 strand is deposited with CNCM - Collection Nationale de Cultures de Microorganismes - Institut Pasteur.

Said bacterial strands are commercially available at the Centro Sperimentale del Latte S.p.A., Strada del Merlino 3 - Zelo Buon Persico (Lodi) - Italy.

Fructooligosaccharides together with lactic bacteria do not alter the organoleptic perception of the dessert cream and represent a further benefit which is given to the confectionery foodstuff making it a complete food under all points of view.

### EXAMPLE 1 (not part of the invention)

Milk containing 3.5% by weight of fat is submitted to a preliminary heating at 90°C, degassing and concentration by evaporation, then it is pasteurized at 90°C and homogenized at 150 bars and 70°C.

Afterwards, the following natural ingredients are solubilized in a starting milk amount of 76.8 g processed as before:
- 4.8 g of wheat flour, type 00,
- 2.5 g of pure milk proteins,
- 4.3 g of powdered chocolate,
- 1.4 g of cocoa,
- 8.7 g of fructose,
- 1.5 g of inulin.

Solubilization of the powdered component mixture takes place during 10 minutes at a temperature of 80°C. The product thus obtained is heated under stirring at a temperature of 85°C and homogenized at a temperature of 85°C and a pressure of 100 bars.

The subsequent step is pasteurization under stirring at a temperature of 90°C over 15 minutes. The pasteurized product is cooled at 50°C and packaged into containers of 100 g each.

### EXAMPLE 2

Example 1 has been repeated following the same conditions, except for the fact that after pasteurization and cooling at 45°C, 0.06 g of a mixture of lyophilized lactic bacteria have been added, said mixture comprising:
- *Streptococcus thermophilus* LMG P-17225 at a concentration of about 130 thousand million CFU/g of lyophilized bacterial culture,
- *Lactobacillus bulgaricus* LMG P-17224 at a concentration of about 40 thousand million CFU/g of lyophilized bacterial culture.
   Ratio by weight of the above mentioned lyophilized lactic bacteria is about 3:1.
   The above lactic bacteria are found living and viable at a high concentration in the dessert cream.

### EXAMPLE 3 (not part of the invention)

Example 1 has been repeated exactly following the same operating conditions, while carrying out variations exclusively as regards ingredients and their corresponding amounts by weight.

Afterwards, the following natural ingredients are solubilized in a starting milk amount of 68.8 g processed as before:
- 4.8 g of wheat flour, type 00,
- 3.0 g of pure milk proteins,
- 4.3 g of powdered chocolate,
- 1.4 g of cocoa,
- 7.5 g of fructose,
- 1.2 g of inulin,
- 9.0 g of isomalt.

### EXAMPLE 4

Example 1 has been repeated following the same conditions, except for the fact that after pasteurization and cooling at 45°C, 0.08 g of a mixture of lyophilized lactic bacteria have been added, said mixture comprising:
- *Streptococcus thermophilus* LMG P-17225 at a concentration of about 100 thousand million CFU/g of lyophilized bacterial culture;
- *Lactobacillus bulgaricus* LMG P-17224 at a concentration of about 25 thousand million CFU/g of lyophilized bacterial culture;
- *Bifidobacterium breve* LMG P-17501 at a concentration of about 50 thousand million CFU/g of bacterial culture;
- *Bifidobacterium infantis* LMG P-17502 at a concentration of about 50 thousand million CFU/g of lyophilized bacterial culture;
- *Bifidobacterium longum* LMG P-17500 at a concentration of about 50 thousand million CFU/g of lyophilized bacterial culture;
- *Bifidobacterium bifidum* LMG P-17499 at a concentration of about 50 thousand million CFU/g of lyophilized bacterial culture.

The two first lyophilized lactic bacteria are present in the bacteria mixture in a ratio by weight of 70%, whereas the remaining four *Bifidobacteria* are present in the bacteria mixture in a ratio by weight of 30%. The above mentioned lactic bacteria are found living and viable at a high concentration in the dessert cream.

### EXAMPLE 5 (not part of the invention)

Example 1 has been repeated, except for the fact that instead of chocolate and cocoa ingredients, the following ingredients have been employed:
- 7.0 g of pasteurized egg yolk,
- 4.3 g of natural extract from vanilla berries,
- 0.1 g of essential lemon oil.

In this example the milk amount is about 71.1 g.

## Claims

1. A fresh dessert cream comprising the following components:
A) milk,
B) wheat floor,
C) pure milk proteins,
D) one or more natural ingredients selected from egg yolk, chocolate, cocoa, coffee, natural extracts from vanilla berries, essential lemon oil, hazelnut and almond flavours and fruit of varying typologies,
E) fructose,
F) one or more fructooligosaccharide, and further comprising lactic bacteria.

2. A dessert cream as claimed in claim 1, in which component A is present in an amount included between 65% and 80% by weigh, relative to the overall weight of the product.

3. A dessert cream as claimed in claim 2, in which component A is present in an amount preferably included between 65% and 75% by weight, relative to the overall weight of the product.

4. A dessert cream as claimed in claim 1, in which component B is present in an amount included between 3% and 6% by weight, relative to the overall weight of the product.

5. A dessert cream as claimed in claim 4, in which component B is present in an amount preferably included between 4% and 4.5% by weight, relative to the overall weight of the product.

6. A dessert cream as claimed in claim 1, in which component C is present in an amount included between 1% and 5% by weight, relative to the overall weight of the product.

7. A dessert cream as claimed in claim 6, in which component C is present in an amount preferably included between 2.5% and 4% by weight, relative to the overall weight of the product.

8. A dessert cream as claimed in claim 1, in which component D is present in an amount included between 0.1% and 9% by weight, relative to the overall weight of the product.

9. A dessert cream as claimed in claim 8, in which component D is present in an amount included between 0.5% and 6% by weight, relative to the overall weight of the product.

10. A dessert cream as claimed in claim 1, in which component E is present in an amount included between 4% and 11% by weight, relative to the overall weight of the product.

11. A dessert cream as claimed in claim 10, in which component E is present in an amount included between 4% and 8% by weight, relative to the overall weight of the product.

12. A dessert cream as claimed in claim 1, in which component F is present in an amount included between 1% and 4% by weight, relative to the overall weight of the product.

13. A dessert cream as claimed in claim 12, in which component F is present in an amount included between 1% and 2% by weight, relative to the overall weight of the product.

14. A dessert cream as claimed in claim 1, in which component F is inulin.

15. A dessert cream as claimed in claim 1, comprising addition of milk cream and/or isomalt.

16. A dessert cream as claimed in claim 15, comprising milk cream in an amount included between 8% and 13% by weight, relative to the overall weight of the product.

17. A dessert cream as claimed in claim 15, comprising isomalt in an amount included between 3% an 10% by weight, relative to the overall weight of the product.

18. A dessert cream as claimed in claim 1, **characterized in that** said lactic bacteria comprise one or more lyophilized lactic bacteria selected from:
- *Streptococcus thermophilus*,
- *Lactobacillus bulgaricus,*
- *Lactobacillus acidophilus,*
- *Lactobacillus casei*,
- *Lactobacillus plantarum,*
- *Bifidobacterium breve,*
- *Bifidobacterium infantis*,
- *Bifidobacterium longum*,
- *Bifidobacterium bifidum,*
- *Streptococcus faecium*.

19. A dessert cream as claimed in claim 18, **characterized in that** it comprises an overall concentration of lyophilized lactic bacteria of at least 50 thousand million CFU/g of lyophilized bacterial culture.

20. A dessert cream as claimed in claim 19, in which the overall concentration of lyophilized lactic bacteria is at least 100 thousand million CFU/g of lyophilized bacterial culture.

21. A dessert cream as claimed in claim 18, **characterized in that** there is a ratio between *Streptococcus thermophilus* and *Lactobacillus bulgaricus* lyophilized lactic bacteria in the range of 1:1 to 10:1 by weight.

22. A process for making the dessert cream as claimed in claim 1, **characterized in that** it comprises the following steps:
a) preheating milk to a temperature included between 50 and 90°C;
b) solubilizing components B, C, D (essential lemon oil excluded), E and F in the preheated milk from step a);
c) heating the product obtained from step b) to a temperature included between 75 and 90°C;
d) homogenizing the product heated in step c), at a pressure included between 80 and 150 bars and a temperature included between 75 and 90°C;
e) pasteurizing the homogenized product obtained from step d) at a temperature included between 85 and 90°C ;
f) cooling the pasteurized product obtained from step e), at a temperature included between 40 and 70°C and subsequently packaging the same into appropriate containers at a temperature of 40-60°C.

## Patentansprüche

1. Eine frische Dessertcreme, die die folgenden Komponenten aufweist:
A) Milch,
B) Weizenmehl,
C) reine Milchproteine,
D) einen oder mehrere natürliche Inhaltstoffe, die ausgewählt sind aus Eigelb, Schokolade, Kakao, Kaffee, natürliche Extrakte von Vanilleschoten, ätherisches Zitronenöl, Haselnuss- und Mandelaromen und Früchte verschiedener Arten,
E) Fructose,
F) ein oder mehrere Fructooligosaccharide, und
die ferner Milchsäurebakterien aufweist.

2. Dessertcreme nach Anspruch 1, bei welcher die Komponente A in einer Menge von zwischen 65 und 80 Gew.-% relativ zum Gesamtgewicht des Produktes enthalten ist.

3. Dessertcreme nach Anspruch 2, bei welcher die Komponente A in einer Menge von zwischen 65 und 75 Gew.-% relativ zum Gesamtgewicht des Produktes enthalten ist.

4. Dessertcreme nach Anspruch 1, in welcher die Komponente B in einer Menge von zwischen 3 und 6 Gew.-% relativ zum Gesamtgewicht des Produktes enthalten ist.

5. Dessertcreme nach Anspruch 4, in welcher die Komponente B in einer Menge von zwischen 4 und 4,5 Gew.-% relativ zum Gesamtgewicht des Produktes enthalten ist.

6. Dessertcreme nach Anspruch 1, in welcher die Komponente C in einer Menge von zwischen 1 und 5 Gew.-% relativ zum Gesamtgewicht des Produktes enthalten ist.

7. Dessertcreme nach Anspruch 6, in welcher die Komponente C in einer Menge von zwischen 2,5 und 4 Gew.-% relativ zum Gesamtgewicht des Produktes enthalten ist.

8. Dessertcreme nach Anspruch 1, in welcher die Komponente D in einer Menge von zwischen 0,1 und 9 Gew.-% relativ zum Gesamtgewicht des Produktes enthalten ist.

9. Dessertcreme nach Anspruch 8, in welcher die Komponente D in einer Menge von zwischen 0,5 und 6 Gew.-% relativ zum Gesamtgewicht des Produktes enthalten ist.

10. Dessertcreme nach Anspruch 1, in welcher die Komponente E in einer Menge von zwischen 4 und 11 Gew.-% relativ zum Gesamtgewicht des Produktes enthalten ist.

11. Dessertcreme nach Anspruch 10, in welcher die Komponente E in einer Menge von zwischen 4 und 8 Gew.-% relativ zum Gesamtgewicht des Produktes enthalten ist.

12. Dessertcreme nach Anspruch 1, in welcher die Komponente F in einer Menge vorliegt, von zwischen 1 und 4 Gew.-% relativ zum Gesamtgewicht des Produktes enthalten ist.

13. Dessertcreme nach Anspruch 12, in welcher die Komponente F in einer Menge von zwischen 1 und 2 Gew.-% relativ zum Gesamtgewicht des Produktes enthalten ist.

14. Dessertcreme nach Anspruch 1, in welcher die Komponente F Inulin ist.

15. Dessertcreme nach Anspruch 1, die ferner eine Hinzufügung von Sahne und/oder Isomalt aufweist.

16. Dessertcreme nach Anspruch 15, die Sahne in einer Menge von zwischen 8 und 13 Gew.-% relativ zum Gesamtgewicht des Produktes aufweist.

17. Dessertcreme nach Anspruch 1, die Isomalt in einer Menge von zwischen 3 und 10 Gew.-% relativ zum Gesamtgewicht des Produktes aufweist.

18. Dessertcreme nach Anspruch 1, **dadurch gekennzeichnet, dass** die Milchsäurebakterien ein oder mehrere lyophilisierte Milchsäurebakterien umfassen, die ausgewählt sind aus:
- *Streptococcus thermophilus,*
- *Lactobacillus bulgaricus,*
- *Lactobacillus acidophilus,*
- *Lactobacillus casei,*
- *Lactobacillus plantarum,*
- *Bi fidobacterium breve,*
- *Bi fidobacterium infantis,*
- *Bi fidobacterium longum,*
- *Bifidobacterium bi fidum,*
- *Streptococcus faecium*.

19. Dessertcreme nach Anspruch 18, **dadurch gekennzeichnet, dass** sie eine Gesamtkonzentration an lyophilisierten Milchsäurebakterien von mindestens fünfzigtausend Millionen CFU/g lyopohilisierter bakterieller Kulturen aufweist.

20. Dessertcreme nach Anspruch 19, in welcher die Gesamtkonzentration der lyophilisierten Milchsäurebakterien mindestens hunderttausend Millionen CFU/g lyophilisierter bakterieller Kulturen ist.

21. Dessertcreme nach Anspruch 18, **dadurch gekennzeichnet, dass** ein Verhältnis der lyophilisierten Milchsäurebakterien *Streptococcus thermophilus* und *Lactobacillus bulgaricus* im Bereich von 1:1 zu 10:1 Masseanteil vorliegt.

22. Verfahren zur Herstellung der Dessertcreme nach Anspruch 1, **dadurch gekennzeichnet, dass** es die folgenden Schritte aufweist:
a) Vorerhitzen der Milch auf eine Temperatur von zwischen 50 und 90°C;
b) Lösen der Komponenten B, C, D (ätherisches Zitronenöl ausgenommen), E und F in der vorerhitzten Milch aus Schritt a);
c) Erhitzen des aus Schritt b) gewonnenen Produktes auf eine Temperatur zwischen 75 und 90°C;
d) Homogenisieren des in Schritt c) erhitzten Produktes mit einem Druck von zwischen 80 und 150 bar und einer Temperatur von zwischen 75 und 90°C;
e) Pasteurisieren des in Schritt d) homogenisierten Produktes bei einer Temperatur von zwischen 85 und 90°C;
f) Abkühlen des in Schritt e) pasteurisierten Produktes bei einer Temperatur von zwischen 40 und 70°C, und anschließend Verpacken desselben in geeignete Behältnisse bei einer Temperatur von 40 bis 60°C.

## Revendications

1. Crème-dessert fraîche comprenant les composants suivants :
(A) lait,
(B) farine de blé,
(C) protéines de lait pures,
(D) un ou plusieurs ingrédients naturels choisis parmi jaune d'oeuf, chocolat, cacao, café, extraits naturels de gousses de vanille, essence de citron, arôme de noisette et d'amande, et fruit de divers types,
(E) fructose,
(F) un ou plusieurs fructo-oligosaccharides, et comprenant de plus des ferments lactiques.

2. Crème-dessert selon la revendication 1, dans laquelle le composant A est présent selon une quantité comprise entre 65 % et 80 % pondéraux, calculée par rapport au poids total du produit.

3. Crème-dessert selon la revendication 2, dans laquelle le composant A est présent selon une quantité comprise de manière préférée entre 65 et 75 % pondéraux, calculée par rapport au poids total du produit.

4. Crème-dessert selon la revendication 1, dans laquelle le composant B est présent selon une quantité comprise entre 3 % et 6 % pondéraux, calculée par rapport au poids total du produit.

5. Crème-dessert selon la revendication 4, dans laquelle le composant B est présent selon une quantité comprise de manière préférée entre 4 et 4,5 % pondéraux, calculée par rapport au poids total du produit.

6. Crème-dessert selon la revendication 1, dans laquelle le composant C est présent selon une quantité comprise entre 1 % et 5 % pondéraux, calculée par rapport au poids total du produit.

7. Crème-dessert selon la revendication 6, dans laquelle le composant C est présent selon une quantité comprise de manière préférée entre 2,5 et 4 % pondéraux, calculée par rapport au poids total du produit.

8. Crème-dessert selon la revendication 1, dans laquelle le composant D est présent selon une quantité comprise entre 0,1 % et 9 % pondéraux, calculée par rapport au poids total du produit.

9. Crème-dessert selon la revendication 8, dans laquelle le composant D est présent selon une quantité comprise entre 0,5 et 6 % pondéraux, calculée par rapport au poids total du produit.

10. Crème-dessert selon la revendication 1, dans laquelle le composant E est présent selon une quantité comprise entre 4 % et 11 % pondéraux, calculée par rapport au poids total du produit.

11. Crème-dessert selon la revendication 10, dans laquelle le composant E est présent selon une quantité comprise entre 4 et 8 % pondéraux, calculée par rapport au poids total du produit.

12. Crème-dessert selon la revendication 1, dans laquelle le composant F est présent selon une quantité comprise entre 1 % et 4 % pondéraux, calculée par rapport au poids total du produit.

13. Crème-dessert selon la revendication 12, dans laquelle le composant F est présent selon une quantité comprise entre 1 et 2 % pondéraux, calculée par rapport au poids total du produit.

14. Crème-dessert selon la revendication 1, dans laquelle le composant F est l'inuline.

15. Crème-dessert selon la revendication 1, comprenant l'ajout de crème de lait et/ou d'isomalt.

16. Crème-dessert selon la revendication 15, comprenant de la crème de lait présente selon une quantité comprise entre 8 % et 13 % pondéraux, calculée par rapport au poids total du produit.

17. Crème-dessert selon la revendication 15, comprenant de l'isomalt selon une quantité comprise entre 3 % et 10 % pondéraux, calculée par rapport au poids total du produit.

18. Crème-dessert selon la revendication 1, ***caractérisée en ce que*** lesdits ferments lactiques comprennent un ou plusieurs ferments lactiques lyophilisés choisis parmi :
- *Streptococcus thermophilus,*
- *Lactobacillus bulgaricus,*
- *Lactobacillus acidophilus,*
- *Lactobacillus casei,*
- *Lactobacillus plantarum,*
- *Bifidobacterium breve,*
- *Bifidobacterium infantis,*
- *Bifidobacterium longum,*
- *Bifidobacterium bifidum,*
- *Streptococcus faecium.*

19. Crème-dessert selon la revendication 18, ***caractérisée en ce qu*'**elle comprend une concentration totale de ferments lactiques lyophilisés d'au moins 50 000 millions de CFU/g de culture bactérienne lyophilisée.

20. Crème-dessert selon la revendication 19, dans laquelle la concentration totale de ferments lactiques lyophilisés est d'au moins 100 000 millions de CFU/g de culture bactérienne lyophilisée.

21. Crème-dessert selon la revendication 18, ***caractérisée en ce qu*'**il y a un rapport entre les ferments lactiques lyophilisés *Streptococcus thermophilus* et *Lactobacillus bulgaricus* compris entre 1/1 et 10/1 en poids.

22. Procédé de préparation de la crème dessert selon la revendication 1, ***caractérisé en ce qu*'**il comprend les étapes suivantes :
(a) préchauffage du lait à une température comprise entre 50 et 90°C ;
(b) solubilisation des composants B, C, D (à l'exclusion de l'essence de citron), E et F dans le lait préchauffé de l'étape (a) ;
(c) chauffage du produit obtenu à l'étape (b) jusqu'à une température comprise entre 75 et 90°C ;
(d) homogénéisation du produit chauffé à l'étape (c), sous une pression comprise entre 80 et 150 bars et à une température comprise entre 75 et 90°C ;
(e) pasteurisation du produit homogénéisé obtenu à l'étape (d) à une température comprise entre 85 et 90°C ;
(f) refroidissement du produit pasteurisé obtenu à l'étape (e) jusqu'à une température comprise entre 40 et 70°C, suivi de son conditionnement dans des contenants appropriés sous une température de 40-60°C.
